# EUROPEAN PATENT APPLICATION

(11) **EP 1 722 558 A1**
(43) Date of publication of application: **15.11.2006**
(21) Application number: 05010524.6
(22) Date of filing: 13.05.2005
(51) Int. Cl.: H04N 5/50, H04N 7/173

(54) **Method of updating a satellite tuning parameter database**

(71) Applicant: CyberLink Corp., Hsin-Tien City, Taipei Hsien (TW)
(72) Inventor: Hsu, Chiao-Fang, Jhonghe City, Taipei County (TW)
(74) Representative: Weber, Joachim

(57) **Abstract**

A method of updating satellite tuning parameters stored in a database (120) of a satellite receiver (110) is disclosed, wherein the satellite receiver (110) is connected to a satellite dish (12) for receiving satellite television signals. The method comprises establishing a connection between the satellite receiver (110) and a backend server (140) via the Internet (130), wherein the backend server (140) stores a plurality of updated satellite tuning parameters; authenticating if the satellite receiver (110) is a valid register; and downloading updated satellite tuning parameters into the database (120) of the satellite receiver (110) from the backend server (140).

## Description

The present invention relates to a method of updating a database of satellite tuning parameters according to the pre-characterizing clause of claim 1.

Satellite television (TV) signals are received through a set-top box connected to a satellite dish. Satellite tuning parameters are stored in a database stored in the set-top box.

The satellite tuning parameters stored in the database need to be updated occasionally, which may cause the loss of some TV programs until the satellite tuning parameters are updated. Unfortunately, the user is not able to update the satellite tuning parameters himself. Instead, the user notifies the vendor of the set-top box, who in turn contacts the satellite broadcaster in order to update the satellite tuning parameters. This leaves the user without a convenient means of quickly updating the satellite tuning parameters by himself.

This in mind, the present invention aims at providing a method of quickly updating satellite tuning parameters.

This is achieved by a method of updating satellite tuning parameters stored in a database of a satellite receiver according to claim 1. The dependent claims pertain to corresponding further developments and improvements.

As will be seen more clearly from the detailed description following below, the claimed method allows the user to download updated satellite tuning parameters from the Internet on his own whenever the database needs to be updated. In this way, the user does not have to contact a third party, and can quickly perform the update on his own.

In the following, the invention is further illustrated by way of example, taking reference to the accompanying drawings. Thereof
Fig. 1 is a diagram of a satellite TV system according to the prior art; and
Fig.2 illustrates a system for watching satellite TV using a TV tuner card according to the present invention.

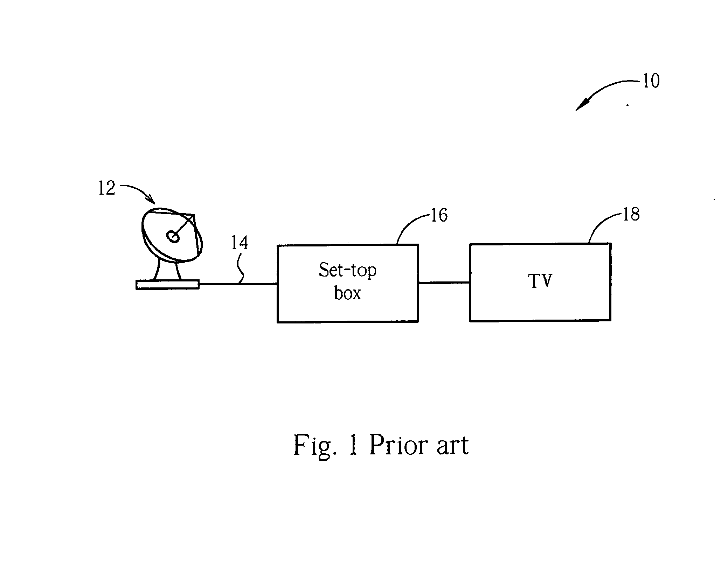

Traditionally, when a user subscribes to a satellite television (TV) service, a technician will come over to the user's house to install a satellite dish and a set-top box. Please refer to Fig.1. Fig.1 is a diagram of a satellite TV system 10 according to the prior art. In the satellite TV system 10, a satellite dish 12 is connected to a set-top box 16 through a cable 14. A TV 18 is connected to the set-top box 16 so that the user can view satellite TV programs through the TV 18. The technician installs the satellite dish 12 and positions it so that the satellite dish 12 is able to receive satellite signals from a satellite orbiting the Earth. In addition, the technician configures the set-top box 16 to have the proper reception parameters for receiving signals from each transponder of the selected satellite. In this satellite TV system 10, the user does not need to go through any complicated setup steps because the technician is the person responsible for setup.

The set-top box 16 contains a database of satellite tuning parameters needed to receive satellite television signals from satellites orbiting the Earth. The database contains a list of all of the satellites above the equator, and contains tuning parameters corresponding to each transponder of each satellite. The set-top box 16 utilizes the satellite tuning parameters stored in the database to scan and receive available television (TV) programs broadcast from satellites.

The satellite tuning parameters stored in the database occasionally need to be updated because satellite broadcasters sometimes modify the satellite tuning parameters needed to communicate with the satellites. If the satellite broadcaster has changed the satellite tuning parameters, users will lose the ability to watch some TV programs until the satellite tuning parameters stored in the database are updated. When this happens, users do not usually know why the TV programs have been lost, and will notify the vendor of the set-top box 16 that there is a problem, or try to reconfigure the settings.

In order to update the satellite tuning parameters stored in the database, the vendor of the set-top box 16 would contact with the satellite broadcaster. The vendor of the set-top box 16 will upgrade the database by downloading the updated satellite tuning parameters through the satellite dish 12 and the cable 14 into the set-top box 16. The data format of the updated satellite tuning parameters is proprietary, so the user is not able to update the database himself.

Unfortunately, when the user notices that there is a problem receiving certain television channels or programs, the user must contact the vendor of the set-top box 16 in order to update the database. There is no convenient way for the user to update the database without the help of the vendor of the set-top box 16. Furthermore, since most users are not familiar with the reconfiguration procedure, they cannot update the database by themselves. Even if some users know how satellite broadcasting works, the interface is still not clear enough for intuitive and user-friendly operation.

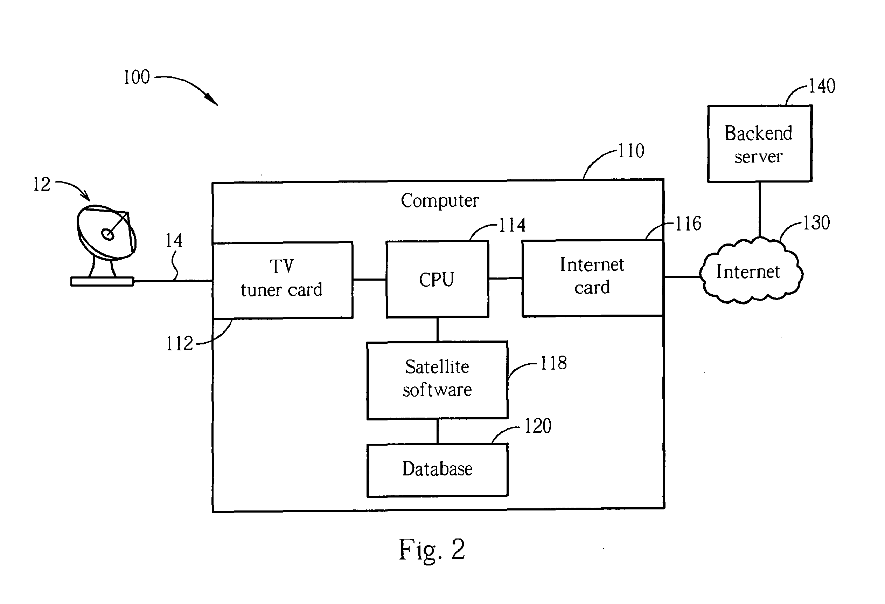

Please refer to Fig.2. Fig.2 illustrates a system 100 for watching satellite TV using a TV tuner card 112 according to the present invention. The computer 110 contains a central processing unit (CPU) 114 for controlling operation of the computer 110. A TV tuner card 112 is installed in a computer 110, and receives signals from the satellite dish 12 via the cable 14. When a user installs the TV tuner card 112 in the computer 110, the user also installs a satellite software program 118 to help configure the TV tuner card 112 to receive satellite signals. When the satellite software program 118 is installed in the computer 110, a database 120 containing satellite tuning parameters is also installed in the computer 110. The satellite tuning parameters allow the computer 110 to receive and decode satellite television signals received from satellites through the satellite dish 12.

The computer 110 also contains an Internet card 116 for connecting to the Internet 130. The Internet card 116 can be a wireless network card, a wired network card such as an Ethernet card, a modem, or any other means for connecting to the Internet 130. When the user installs the satellite software program 118 or at some time afterwards, the user will have an opportunity to register with a backend server 140. The backend server 140 stores the latest satellite tuning parameters. The user can connect the computer 110 to the backend server 140 through the Internet 130 for updating the satellite tuning parameters stored in the database 120.

Over time, the database 120 will have to be updated in order to have the current satellite tuning parameters. There are several ways in which the database 120 can be updated. First of all, after the user has registered with the backend server 140, the backend server 140 can notify the user that updated satellite tuning parameters are available. The user can then update the database 120 at a convenient time.

Another method of updating the database 120 is to have the backend server 140 notify the satellite software program 118 installed on the computer 110 that updated satellite tuning parameters are available. Once the satellite software program 118 receives this notification, the satellite software program 118 can automatically download the updated satellite tuning parameters for updating the database 120.

In addition, the satellite software program 118 can also periodically check with the backend server 140 to see if updated satellite tuning parameters are available. If so, the satellite software program 118 can either automatically download the updated satellite tuning parameters or present a message to notify the user that the updated satellite tuning parameters are available. Please keep in mind that other update methods may also be used in which the computer 110 downloads updated satellite tuning parameters from the backend server 140 via the Internet 130.

In summary, the claimed method provides a way for the computer to update its database with new satellite tuning parameters automatically or provides a way for the user to do it himself via the Internet. Thus, the user does not have to contact a vendor or service provider to help him perform the update, and can minimize the interruptions experienced with the satellite TV reception.

## Claims

1. A method of updating satellite tuning parameters stored in a database (120) of a satellite receiver (110), wherein the satellite receiver (110) is connected to a satellite dish (12) for receiving satellite television signals, the method **characterized by** the steps comprising:
establishing a connection between the satellite receiver (110) and a backend server (140) via the Internet (130), wherein the backend server (140) stores a plurality of updated satellite tuning parameters;
authenticating if the satellite receiver (110) is a valid register; and
downloading updated satellite tuning parameters into the database (120) of the satellite receiver (110) from the backend server (140).

2. The method of claim 1, **characterized in that** the satellite receiver (110) is a computer (110) having an Internet connection (116).

3. The method of claim 1, **characterized in that** the method further comprises the satellite receiver (110) registering with the backend server (140).

4. The method of claim 3, **characterized in that** the method further comprises the backend server (140) transmitting a notification message to the satellite receiver (110) that updated satellite tuning parameters are available.

5. The method of claim 1, **characterized in that** the method further comprises the satellite receiver (110) periodically downloading updated satellite tuning parameters from the backend server (140).

6. A method of updating satellite tuning parameters stored in a database (120) of a computer (110), wherein the computer (110) is connected to a satellite dish (12) for receiving satellite television signals, the method **characterized by** the steps comprising:
establishing a connection between the computer (110) and a backend server (140) via the Internet (130), wherein the backend server (140) stores a plurality of updated satellite tuning parameters;
authenticating if the computer (110) is a valid register; and
downloading updated satellite tuning parameters into the database (120) of the computer (110) from the backend server (140).

7. The method of claim 6, **characterized in that** the method further comprises the backend server (140) transmitting a notification message to the computer (110) that updated satellite tuning parameters are available.

8. The method of claim 6, **characterized in that** the method further comprises the computer (110) periodically downloading updated satellite tuning parameters from the backend server (140).

9. The method of claim 6, **characterized in that** the computer (110) comprises a television tuner card (112), and the satellite dish (12) connects to the computer (110) through the television tuner card (112) for transmitting satellite television signals to the computer (110).
